# EUROPÄISCHE PATENTSCHRIFT

(11) **EP 0 930 249 B1**
(45) Veröffentlichungstag und Bekanntmachung des Hinweises auf die Patenterteilung: **10.04.2002**
(21) Anmeldenummer: 98122964.4
(22) Anmeldetag: 03.12.1998
(51) Int. Cl.: B65G 21/22, B65G 17/26, B65B 59/00, B65B 43/52

(54) **Fördervorrichtung in einer Verpackungsmaschine**
Conveyor in a packaging machine
Transporteur dans une machine d'emballage

(30) Priorität: 15.01.1998 DE 19801193
(43) Veröffentlichungstag der Anmeldung: 21.07.1999
(73) Patentinhaber: IWK Verpackungstechnik GmbH, 76297 Stutensee-Blankenloch (DE)
(72) Erfinder: Plüschow, Dieter, 76297 Stutensee (DE); Hähnel, Bernd, 76297 Stutensee (DE)
(74) Vertreter: Lasch, Hartmut Dipl.-Ing.

(56) Entgegenhaltungen:
- EP-A- 0 060 720
- DE-B- 1 049 302
- FR-A- 1 249 144
- US-A- 3 608 701

## Beschreibung

Die Erfindung betrifft eine Fördervorrichtung in einer Verpackungsmaschine gemäß dem Oberbegriff des Anspruchs 1.

Um Faltschachteln oder sonstige Verpackungen, in die ein Produkt eingeführt werden soll, innerhalb einer Verpackungsmaschine zu transportieren, werden in der Regel in einer Ebene umlaufende Förderketten verwendet, die Aufnahmen für die Verpackungen tragen. Da die Ausbildung einer Vielzahl von Aufnahmen konstruktiv aufwendig ist, ist versucht worden, die Verpackungen direkt auf die Förderkette aufzulegen, die zu diesem Zweck eine Vielzahl von sie abdeckenden Tragkappen zur Bildung einer kontinuierlichen Auflagefläche besitzt.

Aus der DE 33 21 018 C2 ist es bekannt, an jedem der die einzelnen Kettenglieder der Förderkette gelenkig miteinander verbindenden Kettenbolzen eine Tragkappe gelenkig zu lagern, die an ihrem vorderen Ende einen in Förderrichtung weisenden konvexen Abschnitt und an ihrem entgegengesetzten hinteren Ende einen komplementären konkaven Abschnitt aufweist, so daß die Förderkette mit den aufgesetzten Tragkappen an den Kettenrädern einer Umlenkung folgen kann. Die Führung der Förderkette erfolgt dabei durch seitliche Führungswände, an denen die Tragkappen entlang laufen, sowie eine untere Lauffläche, auf der die Tragkappen lose aufliegen und über die sie hinweggleiten. Die Ausbildung der Führungswände sowie der Lauffläche ist konstruktiv aufwendig und somit teuer. Darüber hinaus sind die Tragkappen an einem Abheben von der Lauffläche nicht gehindert, was zu einem unstetigen Lauf der Förderkette und einem unruhigen und ungleichmäßigen Transport der auf der Auflagefläche der Förderkette angeordneten Verpackung führen kann. Dies wird noch dadurch unterstützt, daß die Tragkappen, die jeweils einem Kettenbolzen zugeordnet sind, aufgrund des in der Kette gegebenen Spiels einer Relativbewegung unterliegen können.

Aus der FR 1 249 144 A, von der im Oberbegriff des Anspruchs 1 ausgegangen wird, ist es bekannt, an den Tragkappen seitlich hervorstehende Führungsnasen auszubilden, die mit in Führungsschienen ausgebildeten Führungsnuten in Eingriff bringbar sind, die auf beiden Seiten neben der Förderkette in Förderrichtung verlaufen. Auf diese Weise ist zwar eine verbesserte Führung der Tragkappen erreicht und auch deren Abheben von der Förderkette verhindert, jedoch beanspruchen die Führungsnasen und die Führungsschienen einen relativ großen Bauraum. Darüber hinaus liegt der Anschlußbereich der Führungsnasen an die Tragkappen frei.

Der Erfindung liegt die Aufgabe zugrunde, eine Fördervorrichtung der genannten Art zu schaffen, mit der in konstruktiv einfacher und kompakter Weise ein ruhiger und stetiger Transport der Verpackung oder Produkte sicher gewährleistet ist.

Diese Aufgabe wird mit einer Fördervorrichtung der eingangs genannten Art gelöst, die die kennzeichnenden Merkmale des Anspruchs 1 aufweist.

Das Eingreifen der Führungsnasen, die an die Tragkappen angeformt sein können, in die Führungsnuten gewährleistet in einfacher Weise eine sehr exakte Führung der Tragkappen beim Umlauf der Förderketten, wobei insbesondere bei der bevorzugten Ausgestaltung, wonach die Führungsnasen im wesentlichen spielfrei in die Führungsnuten eingreifen, eine hohe Präzision bei der Bewegung der Tragkappen zu erzielen ist.

Da bei der Fördervorrichtung die Führung nur über den Eingriff der Führungsnasen und somit über eine relativ kleine Fläche erfolgt, ist eine wesentlich verringerte Reibung und eine reduzierte Geräuschentwicklung gegeben.

In der Verpackungsmaschine verläuft die umlaufende Kette in der Regel in einer vertikalen Ebene, wobei die Tragkappen, die einen im wesentlichen U-förmigen Querschnitt mit zwei parallelen, voneinander beabstandeten Schenkeln und einem die Schenkel verbindenden Steg besitzen, derart auf die Kettenglieder aufgesetzt sind, daß der Steg zur Außenseite der Förderkette weist und die Auflagefläche bildet. Dabei ist vorgesehen, daß die Führungsnasen auf den einander zugewandten Innenseiten der Schenkel der Tragkappe angeformt sind, so daß der Eingriffsbereich zwischen den Führungsnasen und der Führungsnut vor äußeren Einflüssen weitestgehend geschützt ist.

Herkömmliche umlaufende Förderketten verlaufen über zumindest zwei Kettenräder und sind in den zwischen den Kettenrädern liegenden Bereichen auf längsverlaufenden Kettenführungen abgestützt. Gemäß der Erfindung ist vorgesehen, daß diese Kettenführung auch zur Führung der Tragkappen mit herangezogen wird, indem die Führungsnuten in der unterhalb der Förderketten angeordneten Kettenführung ausgebildet sind. Auf diese Weise kann auch der konstruktive Mehraufwand durch Ausbildung der Führungsnuten gering gehalten werden.

Ein weiterer Aspekt der Erfindung bezieht sich darauf, einen ruhigen und stetigen Transport der Verpackungen oder Produkte zu erreichen, indem die Relativbewegungen der Tragkappen möglichst gering gehalten werden. Zu diesem Zweck ist erfindungsgemäß nicht jedem Kettenbolzen eine eigene Tragkappe zugeordnet, sondern vorzugsweise ist vorgesehen, daß jede Tragkappe zumindest auf zwei aufeinanderfolgende Kettenbolzen überdeckt und an einem dieser Kettenbolzen gelenkig gelagert ist. Somit kann die Gesamtzahl der Tragkappen deutlich verringert und eine Beruhigung der relativen Tragkappenbewegungen erreicht werden.

Eine einfache Befestigungsmöglichkeit der Tragkappen auf der Förderkette bzw. deren Kettenbolzen ist gegeben, wenn die vorzugsweise aus Kunststoff bestehende Tragkappen auf den zugeordneten, sie gelenkig lagernden Kettenbolzen aufgerastet werden. Dies kann beispielsweise dadurch erreicht werden, daß der die Tragkappe gelenkig haltende Kettenbolzen seitlich über die Kettenglieder vorsteht und in Ausnehmungen der Schenkel der Tragkappe eingreift, wenn diese von oben auf die Förderkette aufgeschoben wird.

Der Transport der auf der oberen Auflagefläche befindlichen Verpackungen oder Produkte kann einerseits allein durch die zwischen der Auflagefläche und den Verpackungen bzw. Produkten auftretende Reibungskräfte erfolgen, vorzugsweise ist jedoch vorgesehen, daß die Verpackungen bzw. Produkte durch nach oben vorstehende Mitnahmefinger transportiert werden. Diese Mitnahmefinger können an den Tragkappen fest angebracht sein, vorzugsweise ist jedoch vorgesehen, daß der Mitnahmefinger an der zugehörigen Tragkappe in lösbarer Weise befestigt ist, indem er beispielsweise angeschraubt wird. Somit ist es möglich, jede Tragkappe wahlweise mit oder ohne Mitnahmefinger auszubilden, so daß der Abstand aufeinanderfolgender Mitnahmefinger veränderbar ist.

Eine besonders präzise Förderung der Verpackungen bzw. Produkte läßt sich erreichen, wenn mehrere Förderketten des genannten Aufbaus nebeneinander angeordnet sind, wobei die an den Ketten angebrachten Mitnahmefinger in Förderrichtung zueinander so versetzt sein können, daß zwischen ihnen die zu befördernde Verpackung in genauer Ausrichtung aufgenommen sein kann.

Bei Faltschachteln, deren axiale Verschlußlaschen nicht ineinander gesteckt, sondern miteinander verleimt werden, ist es notwendig, die Leimlasche vor Zuführung des Produktes zur Freigabe der Einfüllöffnung abzuspreizen. Dies kann dadurch unterstützt werden, daß die Tragkappe in ihrem zwischen der Oberseite und einer Schenkelaußenseite gebildeten Übergangsbereich eine Abschrägung aufweist, gegen die die Leimlasche mit entsprechenden Anschlagfingern gedrückt wird, so daß sie aus der Bewegungsbahn des einzufüllenden Produktes herausgehalten ist.

Weitere Einzelheiten und Merkmale der Erfindung sind aus der folgenden Beschreibung eines Ausführungsbeispiels unter Bezugnahme auf die Zeichnung ersichtlich. Es zeigen:
- Figur 1: eine ausschnittsweise seitliche Ansicht der Fördervorrichtung im Bereich eines Kettenrades und
- Figur 2: den Schnitt II-II in Figur 1.

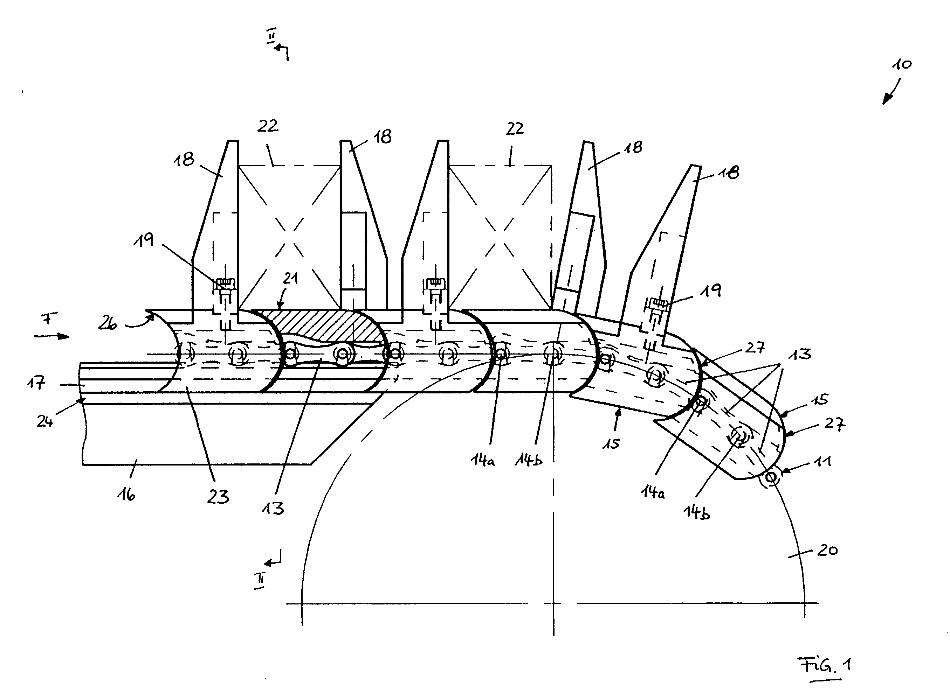

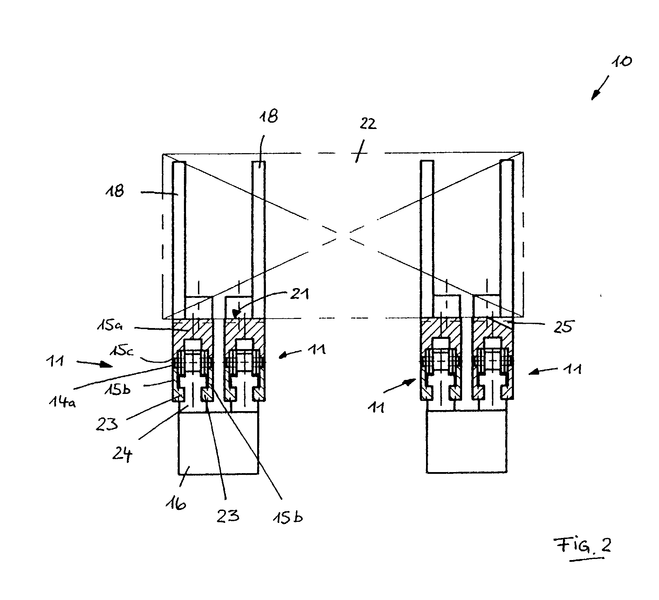

Eine in den Figuren 1 und 2 dargestellte Fördervorrichtung 10 in einer Verpackungsmaschine weist eine in einer im wesentlichen vertikalen Ebene umlaufende Förderkette 11 auf, die den bekannten Aufbau mit einer Vielzahl von Kettengliedern 13 besitzt, die über quer verlaufende Kettenbolzen 14a, 14b gelenkig miteinander verbunden sind. Die Förderkette 11 verläuft über Kettenräder 20, an denen sie umgelenkt wird, sowie in den zwischen den Kettenrädern 20 liegenden Bereichen auf einer sich in Förderrichtung F erstreckenden Kettenführung 24, auf deren Oberseite die Förderkette aufliegt und entlanggleitet.

Auf die Förderkette 11 sind eine Vielzahl von Tragkappen 15 aus Kunststoff aufgesetzt, die an ihrem vorderen, in Förderrichtung F weisenden Ende einen in der Kettenebene konvex gekrümmten Abschnitt 27 und an ihrem hinteren Ende einen entsprechend komplementär gekrümmten konkaven Abschnitt 26 aufweisen. Auf diese Weise ist es möglich, die Förderkette 11 über ihre gesamte Länge kontinuierlich mit Tragkappen 15 zu versehen, wobei sie weiterhin der Umlenkung an den Kettenrädern 20 folgen kann.

Wie Figur 2 zeigt, besitzt die Tragkappe 15 einen U-förmigen Querschnitt mit zwei parallelen, voneinander beabstandeten Schenkeln 15b, die über einen Steg 15a verbunden sind. Die Tragkappe 15 ist so angeordnet, daß der offene Abschnitt des U-Querschnitts bezüglich der umlaufenden Förderkette 11 nach innen weist, während der Steg 15a außen liegt, so daß die Außenflächen der Stege 15a der aufeinanderfolgenden Tragkappen 15 eine im wesentlichen kontinuierliche Auflagefläche 21 bilden.

Jede Tragkappe 15 überdeckt zwei aufeinanderfolgende Kettenbolzen 14a, 14b wobei sie an dem in Förderrichtung F hintenliegenden Kettenbolzen 14a, d.h. nahe ihrem hinteren konkaven Endabschnitt gelenkig gelagert ist. Die Lagerung zwischen dem Kettenbolzen 14a und der Tragkappe 15 ist dadurch erreicht, daß der Kettenbolzen 14a seitlich über die Kettenglieder 13 hervorsteht und in Ausnehmungen 15c der Schenkel 15b der Tragkappe 15 eingreift, wie in Figur 2 dargestellt ist.

Am freien, unteren Ende jedes Schenkels 15b der Tragkappe 15 ist auf der Innenseite eine Führungsnase 23 angeformt, die in eine längs verlaufende Führungsnut 17 im wesentlichen spielfrei eingreifen kann, die in der Kettenführung 24 ausgebildet ist. Durch den Eingriff der Führungsnasen 23 in die jeweiligen Führungsnuten 17 auf entgegengesetzten Seiten der Kettenführung 24 ist eine Bewegung der Tragkappen 15 quer zur Förderrichtung vermieden, so daß eine sehr präzise Förderbewegung gewährleistet ist.

Auf der Oberseite mehrerer oder aller Tragkappen 15 ist eine Aufnahme für eine Befestigungsschraube 19 vorgesehen, über die ein vertikal nach oben bzw. außen vorstehender Mitnahmefinger 18 an der Tragkappe 15 befestigt werden kann. Der Mitnahmefinger 18 dient dazu, mit einer zu befördernden Verpackung 22 in Anlage zu treten.

Wie Figur 2 zeigt, sind bei dem dargestellten Ausführungsbeispiel vier Förderketten parallel nebeneinander angeordnet, bei denen die Oberseiten der Tragkappen eine gemeinsame Auflagefläche 21 für die Verpackung 22 bilden. Die Mitnahmefinger 18 der Förderketten sind derart in Förderrichtung versetzt angeordnet (Fig. 1), daß zwischen ihnen ein Zwischenraum gebildet ist, der den Abmessungen der Verpackung 22 entspricht, so daß diese während des Transportes sicher gehalten ist. Bei Anordnung von vier Förderketten sollten die Mitnahmefinger 18 der beiden äußeren Förderketten an der Verpackung an deren hinterer, der Förderrichtung abgewandten Seite anliegen, während die Mitnahmefinger der beiden mittleren Förderketten an der in Förderrichtung weisenden Seite der Verpackung anliegen.

Gemäß Figur 2 sind die Kettenführungen 24 von jeweils zwei Förderketten 11 auf einem gemeinsamen Träger 16 angeordnet. Die Anzahl der Förderketten sowie der Mitnahmefinger ist jedoch von der Größe der zu transportierenden Faltschachtel abhängig und kann beliebig variieren.

Bei Faltschachteln, deren axiale Verschlußlaschen zum Verschließen der Faltschachtel nicht ineinandergesteckt, sondern miteinander verleimt werden, ist es notwendig, die Leimlasche zuverlässig aus dem Transportweg des seitlich zuzuführenden Produktes herauszuhalten. Zu diesem Zweck ist gemäß Figur 2 bei den Tragkappen 15 der außenliegenden rechten Förderkette 11, an der die nicht dargestellte Leimlasche einer entsprechenden Verpackung angeordnet ist, in ihrem oberen äußeren Eckbereich, d.h. im Übergangsbereich zwischen der Oberseite und der Schenkelaußenseite eine Abschrägung 25 vorgesehen, gegen die die Leimlasche angelegt werden kann, so daß die Zuführung des Produktes durch die Leimlasche nicht behindert ist.

## Patentansprüche

1. Fördervorrichtung in einer Verpackungsmaschine, mit einer umlaufenden Förderkette (11), die eine Vielzahl von über quer verlaufende Kettenbolzen (14a, 14b) gelenkig miteinander verbundenen Kettenglieder (13) und auf die Kettenglieder (13) aufgesetzte, eine im wesentlichen kontinuierliche Auflagefläche (21) bildende Tragkappen (15) aufweist, die einen im wesentlichen U-förmigen Querschnitt mit zwei parallelen, voneinander beabstandeten Schenkeln (15b), die über einen Steg (15a) verbunden sind, besitzen und mittels ihrer Schenkel (15b) gelenkig an jeweils einem Kettenbolzen (14a) gehalten sind, wobei an den Tragkappen (15) vorstehende Führungsnasen (23) ausgebildet sind, die mit in Förderrichtung verlaufenden Führungsnuten (17) in Eingriff bringbar sind, **dadurch gekennzeichnet, daß** die Führungsnasen (23) auf den einander zugewandten Innenseiten der Schenkel (15b) der Tragkappe (15) angeformt sind und daß die Führungsnuten (17) in einer unterhalb der Förderkette (11) angeordneten Kettenführung (24) ausgebildet sind.

2. Fördervorrichtung nach Anspruch 1, **dadurch gekennzeichnet, daß** die Führungsnasen (23) im wesentlichen spielfrei in die Führungsnuten (17) eingreifen.

3. Fördervorrichtung nach Anspruch 1 oder 2, **dadurch gekennzeichnet, daß** jede Tragkappe (15) zumindest zwei aufeinanderfolgende Kettenbolzen (14a, 14b) überdeckt und an einem dieser Kettenbolzen (14a) gelenkig gelagert ist.

4. Fördervorrichtung nach einem der Ansprüche 1 bis 3, **dadurch gekennzeichnet, daß** der die Tragkappe (15) gelenkig haltende Kettenbolzen (14a) seitlich über die Kettenglieder (13) vorsteht und in Ausnehmungen (15c) der Schenkel (15b) der Tragkappe (15) eingreift.

5. Fördervorrichtung nach einem der Ansprüche 1 bis 4, **dadurch gekennzeichnet, daß** auf der die Auflagefläche (21) bildenden Oberseite der Tragkappe (15) ein Mitnahmefinger (18) anbringbar ist.

6. Fördervorrichtung nach einem der Ansprüche 1 bis 5, **dadurch gekennzeichnet, daß** mehrere Förderketten (11) nebeneinander angeordnet sind.

7. Fördervorrichtung nach einem der Ansprüche 1 bis 6, **dadurch gekennzeichnet, daß** die Tragkappe (15) in ihrem zwischen der Oberseite und einer Schenkelaußenseite gebildeten Übergangsbereich eine Abschrägung (25) aufweist.

## Claims

1. Conveyor device in a packaging machine, the device comprising a circulating conveyor chain (11) having a plurality of chain links (13) in hinged connection with each other via transverse chain bolts (14a,14b), and support caps (15) disposed over said chain links (13) to form a substantially continuous seating surface (21), said support caps (15) having a substantially U-shaped cross section with two parallel mutually separated legs (15b) connected to each other by a brace (15a) and being borne in a hinged manner on one of said chain bolts (14a) by means of their legs (15b), said support caps (15) having protruding guide noses (23) engaging guide grooves (17) extending in a transport direction, **characterised in that** said guide noses (23) are formed on facing inner sides of said legs (15b) of said support caps (15) and that said guide grooves (17) are formed in a chain guide (24) disposed below said conveyor chain (11).

2. Conveyor device according to claim 1, **characterised in that** said guide noses (23) engage substantially without play into said guide grooves (17).

3. Conveyor device according to claim 1 or 2, **characterised in that** each of said support caps (15) covers at least two neighboring chain bolts (14a,14b) and is borne in a linked manner to one (14a) of these chain bolts.

4. Conveyor device according to one of the claims 1 to 3, **characterised in that** said chain bolt (14) bearing said support cap (15) in a hinged manner projects in a sideward direction beyond said chain links (13) and engages into recesses (15c) of said legs (15b) of said support cap (15).

5. Conveyor device according to one of the claims 1 to 4, **characterised in that** a transport finger (18) is mountable to the upper surface of said support cap (15) forming said seating surface (21).

6. Conveyor device according to one of the claims 1 to 5, **characterised in that** a plurality of conveyor chains (11) are disposed proximate to each other.

7. Conveyor device according to one of the claims 1 to 6, **characterised in that** said support cap (15) has a bevel (25) disposed in a transition portion between said upper surface and an outer side of said leg.

## Revendications

1. Dispositif de convoyage dans une machine d'emballage, comprenant une chaîne de convoyage (11) continue qui présente un grand nombre de maillons de chaîne (13) reliés articulés entre eux par des tourillons de chaîne (14a,14b) disposés transversalement, et des coiffes-support (15) disposées sur les maillons de chaîne (13) formant une surface-support (21) sensiblement continue, coiffes présentant une section de forme générale en U à deux branches (15b) parallèles à distance l'une de l'autre reliées par une traverse (15a), et maintenues chacune d'entre elles articulées par leurs branches (15b) à un tourillon de chaîne (14a), des taquets de guidage (23) en saillie étant conformés sur les coiffes-support et pouvant être insérés dans des rainures de guidage (17) disposées dans le sens du convoyage, **caractérisé en ce que** les taquets de guidage (23) sont formés sur des faces internes en regard des branches (15b) de la coiffe-support (15) et **en ce que** les rainures de guidage (17) sont formées dans un guide de chaîne (24) disposé en-dessous de la chaîne de convoyage (11).

2. Dispositif de convoyage selon la revendication 1, **caractérisé en ce que** les taquets de guidage (23) viennent en prise dans les rainures de guidage (17) sensiblement sans jeu.

3. Dispositif de convoyage selon la revendication 1 ou 2, **caractérisé en ce que** chaque coiffe-support (15) couvre au moins deux tourillons de chaîne (14a,14b) successifs, et est montée articulée à l'un de ces tourillons (14a).

4. Dispositif de convoyage selon l'une quelconque des revendications 1 à 3, **caractérisé en ce que** le tourillon de chaîne (14a) maintenant articulée la coiffe-support (15) fait saillie latéralement au-dessus des maillons de chaîne (13) et est inséré dans des évidements (15c) des branches (15b) de la coiffe-support (15).

5. Dispositif de convoyage selon l'une quelconque des revendications 1 à 4, **caractérisé en ce que** sur la face supérieure de la coiffe-support (15) formant la surface-support (21) peut être monté un doigt d'entraînement (18).

6. Dispositif de convoyage selon l'une quelconque des revendications 1 à 5, **caractérisé en ce que** plusieurs chaînes de convoyage (11) sont disposées côte à côte.

7. Dispositif de convoyage sl'1 à 6, **caractérisé en ce que** la coiffe-support (15) présente dans sa zone de transition formée entre la face supérieure et une face extérieure de branche un chanfrein (25).
